# EUROPÄISCHE PATENTSCHRIFT

(11) **EP 2 939 332 B1**
(45) Veröffentlichungstag und Bekanntmachung des Hinweises auf die Patenterteilung: **09.05.2018**
(21) Anmeldenummer: 13814857.2
(22) Anmeldetag: 06.12.2013
(51) Int. Cl.: H02K 15/12, H02K 3/52, H02K 9/22, H02K 3/34, H02K 3/48, H02K 15/095

(54) **VERFAHREN ZUM WICKELN EINER ERREGERSPULE FÜR EINE ELEKTRISCHE MASCHINE SOWIE EINE ERREGERSPULE**
METHOD FOR WINDING AN EXCITATION COIL FOR AN ELECTRIC MACHINE AND AN EXCITATION COIL
PROCÉDÉ D'ENROULEMENT D'UNE BOBINE D'EXCITATION POUR UN MOTEUR ÉLECTRIQUE ET BOBINE D'EXCITATION

(30) Priorität: 27.12.2012 DE 102012224375
(43) Veröffentlichungstag der Anmeldung: 04.11.2015
(73) Patentinhaber: Robert Bosch GmbH, 70442 Stuttgart (DE)
(72) Erfinder: NOMMENSEN, Bjoern, H-1103 Budadpest (HU); HEID, Thomas, 77886 Lauf (DE); SCHLEGEL, Jan, 70563 Stuttgart (DE)
(86) Internationale Anmeldenummer: PCT/EP2013/075780
(87) Internationale Veröffentlichungsnummer: WO 2014/102049

(56) Entgegenhaltungen:
- EP-A1- 2 439 831
- JP-A- 2003 164 088
- JP-A- 2005 295 684
- JP-A- 2007 215 334
- US-A1- 2009 015 094

## Beschreibung

### Technisches Gebiet

Die Erfindung betrifft ein Verfahren zum Wickeln einer Erregerspule für eine elektrische Maschine. Ferner betrifft die Erfindung eine Erregerspule sowie eine elektrische Maschine mit einer genannten Erregerspule.

### Stand der Technik

Permanentmagneterregte elektrische Maschinen weisen Statoren mit Statorzähnen auf, an denen Statorspulen angeordnet sind. Aus der Druckschrift AT 406 922 B ist ein Elektromotor mit einem Wicklungsträger für Statorwicklungen bekannt, wobei auf dem Wicklungsträger die Statorwicklungen in einfacher Weise gewickelt werden.

Das Dokument JP 2007 215334 A offenbart einen Wicklungsträger mit einem viskosen wärmeleitfähigen Medium.

### Offenbarung der Erfindung

Erfindungsgemäß ist ein Verfahren zum Wickeln einer Erregerspule für eine elektrische Maschine gemäß Anspruch 1 sowie eine Erregerspule für eine elektrische Maschine gemäß dem nebengeordneten Anspruch 5 angegeben.

Bevorzugte Ausgestaltungen sind in den abhängigen Ansprüchen angegeben.

Gemäß einem Aspekt der Erfindung umfasst ein Verfahren zum Wickeln einer Erregerspule für eine elektrische Maschine die Schritte des Auftragens eines wärmeleitfähigen Mediums auf einen Wicklungsträger und des Aufwickelns einer Spule auf den Wicklungsträger, auf den das wärmeleitfähige Medium aufgetragen ist.

Eine auf einen Wicklungsträger gewickelte Spule in einer elektrischen Maschine, wie z.B. einem Elektromotor, dient zum Erzeugen eines Magnetfeldes, das in einer bekannten Weise erregt wird, um in der elektrische Maschine einen Rotor relativ zu einem Stator zu bewegen. Der Wicklungsträger kann im Rahmen des angegebenen Verfahrens ein Zahn eines Stator- oder Rotorblechpaket sein, auf das die Spule aufgewickelt werden kann. Alternativ kann der Wicklungsträger auch eine Hülse sein, auf die die Spule aufgewickelt wird. Die Hülse mit der aufgewickelten Spule kann dann auf den Zahn aufgesetzt werden.

Dem obigen Verfahren liegt die Überlegung zugrunde, dass eine elektrische Maschine für einen platzsparenden Aufbau eine hohe Leistungsdichte aufweisen muss. Mit steigender Leistungsdichte steht jedoch immer weniger Raum in der elektrische Maschine zur Verfügung, Abwärme abzuführen, die während des Betriebs der elektrischen Maschine erzeugt wird, denn die Leistungsdichte hängt vom Bauraum der elektrischen Maschine ab, der benötigt wird, um eine vorbestimmte Leistung zu erzeugen. Die Abwärme, die beim Betrieb der elektrischen Maschine in der Spule erzeugt wird, muss jedoch schnell und effizient von der Spule abgeführt werden, um die elektrische Maschine nicht zu beschädigen.

Um die Wärmeabfuhr sicherzustellen, kann die auf den Wicklungsträger aufgewickelte Spule über ein wärmeleitfähiges Medium mit dem Wicklungsträger kontaktiert werden, wodurch das wärmeleitfähige Medium die oben genannte Abwärme aus der Erregerspule aufnimmt und diese an den Wicklungsträger abführt. Das wärmeleitfähige Medium kann dabei als viskose Masse auf die Erregerspule aufgetragen werden, die dann - eine ausreichende Menge vorausgesetzt - in Zwischenräume zwischen den einzelnen Wicklungen der Erregerspule eindringt und so den Wärmekontakt zwischen der Erregerspule und den Wicklungsträger herstellt. Auf diese Weise kann die Erregerspule ohne größere Zusatzkosten und Mehraufwand mit geringerem thermischen Widerstand an den Wicklungsträger angebunden werden.

Jedoch kann das auf die Erregerspule aufgetragene wärmeleitfähige Medium jedoch zwischen den einzelnen Wicklungen der Erregerspule Zwischenräume hinterlassen, die nicht vom wärmeleitfähigen Medium ausgefüllt werden. Diese Zwischenräume häufen sich, je tiefer das wärmeleitfähige Medium in die Erregerspule auf dem Wicklungsträger eindringen muss, so dass unter Umständen gar keine thermische Anbindung einzelner Bereiche der Erregerspule an den Wicklungsträger stattfindet. Daher sollte das wärmeleitfähige Medium nicht nach dem Wickeln der Erregerspule auf den Wicklungsträger sondern vor dem Wickeln der Erregerspule auf den Wicklungsträger aufgetragen werden, so dass in jedem Fall eine direkte thermische Kopplung der Spule mit dem Wicklungsträger über das wärmeleitfähige Medium sichergestellt ist.

In einer nach dem obigen Verfahren gewickelten Erregerspule wird während des Betrieb einer elektrischen Maschine, in der die Erregerspule vorgesehen ist, in der Erregerspule erzeugte Abwärme über das zwischen dem Wicklungsträger und der Erregerspule angeordnete wärmeleitfähige Medium direkt und effizient zum Wicklungsträger abgeführt, der die Erregerspule somit beispielsweise über eine Kühlvorrichtung kühlen kann. Dadurch wird eine Absenkung des thermischen Widerstands zwischen Wicklung und Wicklungsträger erzielt, die es erlaubt, die Leistungsdichte in der elektrischen Maschine weiter zu erhöhen.

Der Mehraufwand für das angegebene Verfahren ist dabei gering, da kein zusätzlicher Verfahrensschritt eingeführt sondern lediglich die zeitliche Reihenfolge der Verfahrensschritte in besonderer Weise vorgegebenen wird.

Als das wärmeleitfähige Medium kann jedes beliebige Medium, wie beispielsweise ein wärmeleitfähiges Band herangezogen werden, das einen thermischen Kontakt zwischen der Erregerspule und dem Wicklungsträger herstellen kann. In einer Ausführungsform des obigen Verfahrens wird als wärmeleitfähiges Medium ein viskoses Medium auf den Wicklungsträger aufgetragen. Die Viskosität des Mediums erlaubt es, dies technisch einfach und zeitsparend auf den Wicklungsträger aufzutragen. Ferner kann der Spulendraht beim Wickeln der Erregerspule auf den Wicklungsträger in das wärmeleitfähige Medium eintauchen, da er das viskose wärmeleitfähige Medium beim Aufwickeln der Erregerspule verdrängen kann. Auf diese Weise wird die Wärmekontaktfläche zwischen der Spule und dem wärmeleitfähigen Medium, über die Wärme von der Erregerspule abgeführt werden kann, vergrößert, was die Wärmeabfuhr deutlich verbessert. Ferner verhindert das viskose wärmeleitfähige Medium die Bildung der oben genannten Lufteinschlüsse zwischen den einzelnen Spulendrähten der Erregerspule, da die einzelnen Spulendrähte in das bereits auf den Wicklungsträger aufgetragene viskose wärmeleitfähige Medium eintauchen und sich so die oben genannten Lufteinschlüsse nicht bilden können.

Besonders bevorzugt kann als wärmeleitfähiges, viskoses Medium ein elektrisch isolierendes Medium ausgewählt, das einzelnen Spulendrähte untereinander elektrisch isoliert.

In einer weiteren Ausführungsform des obigen Verfahrens kann als viskoses Medium eine Wärmeleitpaste auf den Wicklungsträger aufgetragen. Ein pastöses Medium ist ausreichend streichfest, dass sich in einfacher Weise auf den Wicklungsträger auftragen lässt, ohne vom Wicklungsträger wieder herunterzufallen. Die Wärmeleitpaste sollte dabei für einen einfachen Transport, Lagerung und Handhabung eine hohe Viskosität aufweisen, wodurch die Herstellungskosten der elektrischen Maschine insgesamt weiter gesenkt werden können.

In einer weiteren Ausführungsform des obigen Verfahrens wird als das viskose Medium ein wärmeleitfähiger Kleber auf den Wicklungsträger aufgetragen. Durch den Kleber haftet Spulendraht der Erregerspule während des Wickelns auf dem Wicklungsträger, so dass weitere Vorkehrungen, die den Halt des Spulendrahtes am Wicklungsträger sicherstellen obsolet sind. Härtet der Kleber aus, hält dieser die einzelnen Spulendrähte der auf den Wicklungsträger aufgewickelten Erregerspule an einem bestimmten Ort und stellt stabilisiert somit die Spule mechanisch, ohne dass zusätzliche Befestigungsmittel am Wicklungsträger notwendig wären. Auf diese Weise lassen sich bei der Herstellung der elektrischen Maschine weitere Kosten sparen.

In einer weiteren Ausführungsform des obigen Verfahrens wird die Oberfläche des Wicklungsträgers, auf der das wärmeleitfähige Medium aufgetragen wird, vor dem Auftragen des wärmeleitfähigen Mediums aufgeraut. Durch das Aufrauen wird die Oberfläche des Wicklungsträgers vergrößert und bietet somit insbesondere dem viskosen wärmeleitfähigen Medium eine höhere Haftfläche. Diese bietet nicht nur eine größere Wärmekontaktfläche, um von dem wärmeleitfähigen Medium aus den Wicklungsdrähten der Erregerwicklung aufgenommene Wärme an den Wicklungsträger abzugeben, rotiert der Wicklungsträger beim Wickeln der Erregerspule, so bietet die höhere Haftfläche einen besseren Halt für das wärmeleitfähige Medium und verhindert, dass dieses vom Wicklungsträger wieder heruntergeschleudert wird. Auf diese Weise kann der Wicklungsträger beim Wickeln der Erregerspule mit höheren Drehzahlen gedreht werden, wodurch sich die Erregerspule schneller wickeln lässt.

Gemäß einem weiteren Aspekt der Erfindung wird eine Erregerspule für eine elektrische Maschine bereitgestellt, die mit einem der obigen Verfahren hergestellt, also auf einen Wicklungsträger aufgewickelt, ist.

Gemäß einem weiteren Aspekt der Erfindung wird ein Rotor umfassend eine obige Erregerspule bereitgestellt.

Gemäß noch einem weiteren Aspekt der Erfindung wird ein Stator umfassend eine obige Erregerspule bereitgestellt.

Gemäß noch einem weiteren Aspekt der Erfindung wird eine elektrische Maschine umfassend einen obigen Rotor und/oder einen obigen Stator bereitgestellt.

Gemäß noch einem weiteren Aspekt der Erfindung wird ein elektrisches Gerät, insbesondere ein Elektromotorroller, umfassend die obige elektrische Maschine zu seinem Antrieb bereitgestellt.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Fig. 1: eine schematische Darstellung eines Elektrorollers mit einem Elektromotor;
- Fig. 2: eine schematische Darstellung des Elektromotors aus Fig. 1;
- Fig. 3: einen Ausschnitt aus einem Rotor des Elektromotors aus Fig. 2 in einem ersten Herstellungszustand.
- Fig. 4: einen Ausschnitt aus dem Rotor des Elektromotors aus Fig. 2 in einem zweiten Herstellungszustand.
- Fig. 5: einen Ausschnitt aus dem Rotor des Elektromotors aus Fig. 2 in einem dritten Herstellungszustand.

### Beschreibung der Ausführungsformen

In den Figuren werden Elemente gleicher oder vergleichbarer Funktion mit gleichen Bezugszeichen versehen und nur einmal beschrieben.

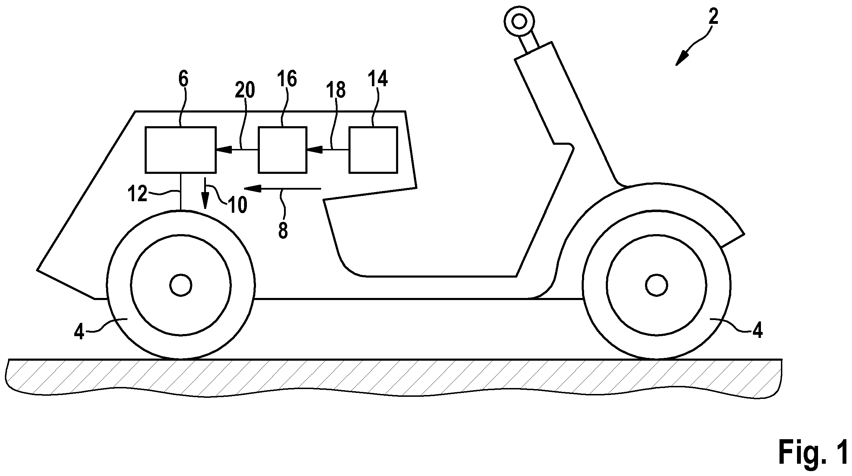

Es wird auf Figur 1 Bezug genommen, die einen schematische Darstellung eines Elektromotorrollers 2 zeigt.

Der Elektromotorroller 2 umfasst in einer an sich bekannten Weise zwei Räder 4, die über einen Elektromotor 6 (als elektrische Maschine) angetrieben werden. Der Elektromotor 6 wandelt dabei in einer an sich bekannten Weise eine elektrische Energie 8 in eine mechanische Energie 10, die die Räder 4 über eine Antriebswelle 12 antreibt. Auf eine Darstellung eines eventuell vorhandenes Getriebes oder anderer mechanischer Bauteile im mechanischen Antriebsstrang des Elektromotors 6 wurde der Übersichtlichkeit halber verzichtet.

Die elektrische Energie 8 zum Antrieb des Elektromotors 6 kann in einer Batterie 14 gespeichert sein, aus der die elektrische Energie 12 über einen Stromrichter 16 abgegeben wird. Der Stromrichter 16 wandelt dabei in einer dem Fachmann bekannten Weise einen aus der Batterie 14 abgegebenen Gleichstrom 18 in einen Wechselstrom 20, mit dem der Elektromotor 6 in einer dem Fachmann bekannten Weise angetrieben werden kann.

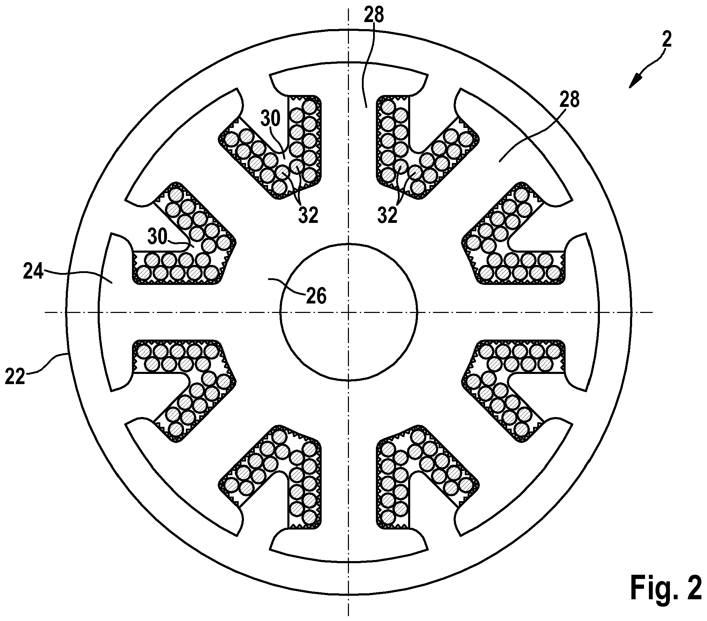

Es wird auf Figur 2 Bezug genommen, die den Elektromotor 6 aus Fig. 1 zeigt.

Der Elektromotor 6 weist einen schematisch dargestellten Stator 22 und einen konzentrisch im Stator 2 aufgenommenen Rotor 24 auf, der in einer dem Fachmann bekannten Weise im Stator 22 basierend auf dem in Figur 1 gezeigten Wechselstrom 20 angetrieben und gedreht wird.

Der Rotor 24 umfasst in der vorliegenden Ausführung einen Rotorring 26 und Rotorschenkel 28, die am Rotorring 26 radial nach außen gerichtet angeordnet sind. Von diesen Rotorschenkeln 28 sind in Figur 2 nicht alle mit einem Bezugszeichen versehen.

Auf jeden der Rotorschenkel 28 ist in der vorliegenden Ausführung ein wärmeleitfähiger Kleber 30 aufgetragen. In den wärmeleitfähigen Kleber 30 ist auf jedem Rotorschenkel 28 eine Spule 32 eingewickelt, die in der vorliegenden Ausführung der Übersichtlichkeit halber nicht alle mit einem Bezugszeichen versehen sind.

Die Spulen 32 können beispielsweise von dem Wechselstrom 20 durchflossen werden und erregen so ein magnetisches Feld, das in einer dem Fachmann bekannten Weise zum Antrieb des Elektromotors 6 genutzt werden kann. Die Spulen 4 werden daher nachstehend auch als Erregerspulen 32 bezeichnet.

Nachstehend soll ein Verfahren beschrieben werden, mit dem die Erregerspulen 32 auf die Rotorschenkel 28 aufgewickelt werden können.

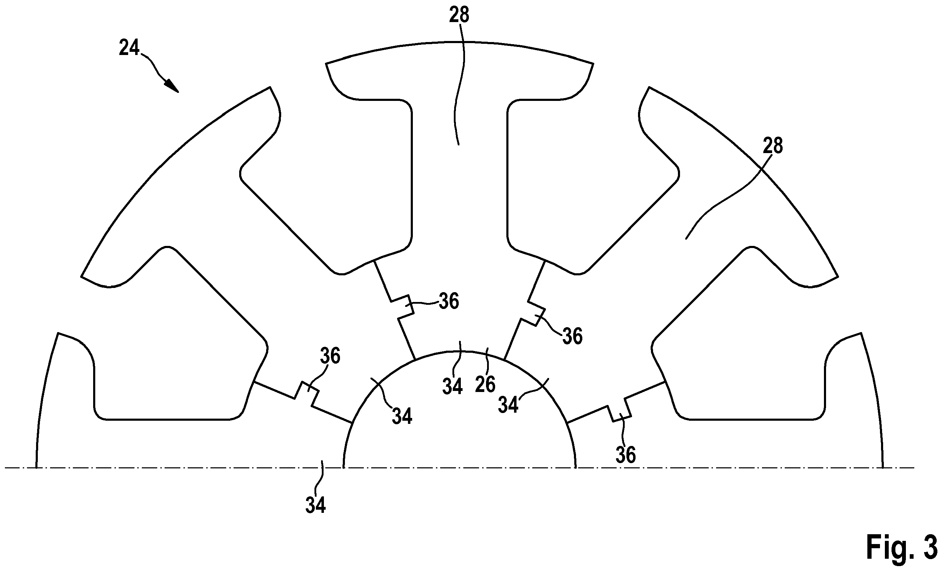

Es wird auf Figur 3 Bezug genommen, die einen Ausschnitt des Rotors 24 aus Figur 2 zeigt.

Der Rotor 24 kann aus mehreren Rotorsegmenten 34 über Feder-Nutverbindungen 36 zu der in Fig. 2 gezeigten Form zusammengesetzt sein. Auf diese Weise könnten die einzelnen Rotorsegmente 34 zunächst mit der Erregerspule 32 gewickelt und abschließend zum Rotor 24 zusammengesetzt werden.

Alternativ können die Erregerwicklungen auch auf den vollständig zusammengesetzten Rotor 24 aufgewickelt werden, was der Einfachheit halber nachstehend angenommen werden soll.

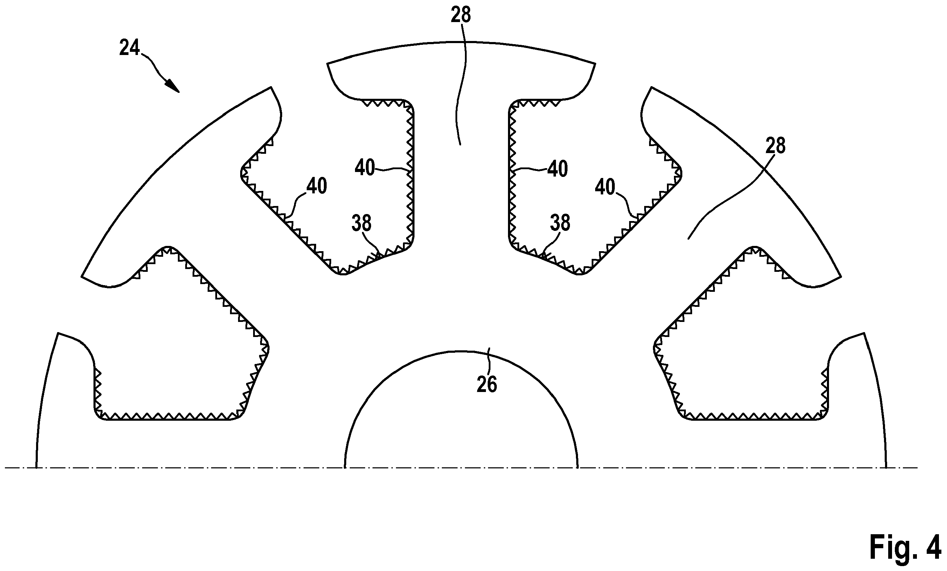

Es wird auf Fig. 4 Bezug genommen, die den Ausschnitt des Rotors 24 aus Figur 2 nach einem Vorbereitungsschritt zum Aufwickeln der Erregerspulen 32 auf den Rotor 24 zeigt.

Im Rahmen dieses Vorbereitungsschrittes kann eine Oberfläche 38 in den Bereichen 40 der Rotorschenkel 28 des Rotors 24 aufgeraut werden, auf denen die Erregerspulen 32 aufgewickelt werden sollen.

Das Aufrauen kann beispielsweise mittels eines Lasers, einer mechanischen Aufrauvorrichtung oder in einer beliebigen anderen Weise erfolgen.

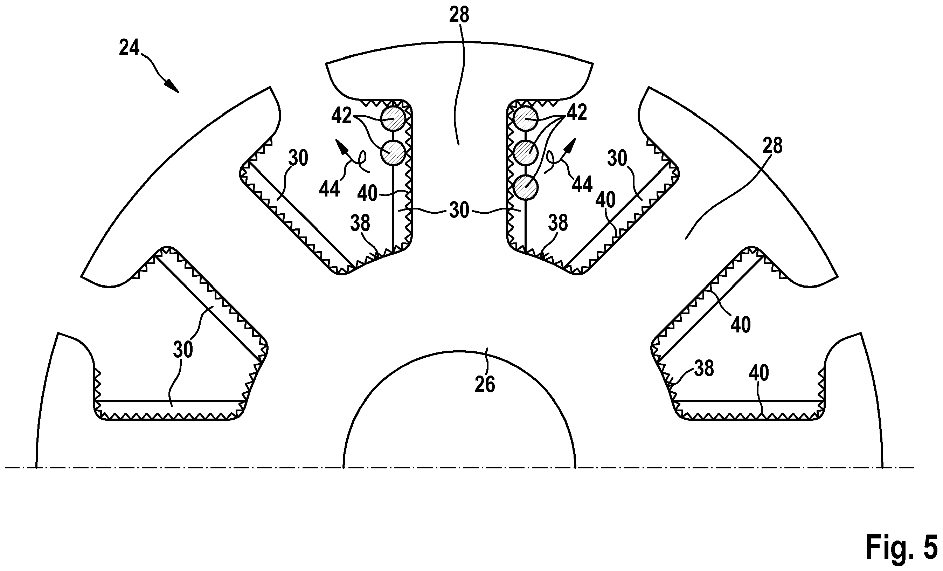

Es wird auf Figur 5 Bezug genommen, die den Ausschnitt des Rotors 24 aus Figur2 während eines Wicklungsschrittes einer der Erregerspulen 32 auf einen der Rotorschenkel 28 des Rotors 24 zeigt.

Wie in Figur 5 zu sehen, wurden die Rotorschenkel 28 zuvor mit dem wärmeleitfähigen Kleber 30 bestrichen.

Auf diese Schicht mit wärmeleitfähigen Kleber 30 werden nun die einzelnen Drähte 42 der Spulen 32 aufgewickelt, was in Figur 5 mit wendelförmigen Pfeilen 44 angedeutet ist. Die Drähte 42 tauchen dabei in den wärmeleitfähigen Kleber 30 ein und werden nach dem Abschluss des Wickelns der Erregerspule 32, wie in Figur 2 gezeigt, vollständig vom wärmeleitfähigen Kleber 30 umschlossen.

Nach dem Wickeln der Erregerspule 32 kann der wärmeleitfähige Kleber 30 aushärten und die Erregerspule 32 fest auf dem Rotorschenkel 28 halten, so dass der wärmeleitfähige Kleber 30 nicht nur Wärme aus der Erregerspule 32 in den Rotorschenkel 28 abführt, sondern auch die Erregerspule 32 auf dem Rotorschenkel 28 stabilisiert.

Das Verfahren wurde anhand des Rotors 24 des Elektromotors 6 beschrieben. Es kann alternativ oder zusätzlich am Stator 22 angewendet werden, sofern auch an Stator 22 entsprechende Statorschenkel mit Erregerspulen angeordnet werden sollen.

## Patentansprüche

1. Verfahren zum Wickeln einer Erregerspule (32) für eine elektrische Maschine (6), umfassend:
- Auftragen eines wärmeleitfähigen Mediums (30) auf einen Wicklungsträger (28), und
- Aufwickeln einer Spule (32) auf den Wicklungsträger (28), auf den das wärmeleitfähige Medium (30) aufgetragen ist, wobei das wärmeleitfähige Medium (30) ein viskoses Medium (30) ist, sodass der Spulendraht beim Wickeln der Erregerspule auf den Wicklungsträger in das wärmeleitfähige Medium (30) eintaucht, **dadurch gekennzeichnet, dass** eine Oberfläche (38) des Wicklungsträgers (28) in Bereichen (40) von Rotorschenkeln aufgeraut wird, **und der Spulendraht wird vollständig vom viskosen Medium (30) umschlossen nach dem Wickeln der einzelnen Spulendrähte, sodass die Zwischenräume zwischen den einzelnen Spulendrähten ausgefüllt sind.**

2. Verfahren nach Anspruch 1, wobei das viskose Medium (30) eine Wärmeleitpaste (30) ist.

3. Verfahren nach Anspruch 1, wobei das viskose Medium (30) ein Kleber (30) ist.

4. Verfahren nach einem der vorstehenden Ansprüche, umfassend Aufrauen einer Oberfläche (38) des Wicklungsträgers (28), vor dem Auftragen des wärmeleitfähigen Mediums (30).

5. Erregerspule (32) für eine elektrische Maschine (6), die mit einem Verfahren nach Anspruch 1 hergestellt ist.

6. Rotor (24) umfassend eine Erregerspule (32) nach Anspruch 5.

7. Stator (22) umfassend eine Erregerspule (32) nach Anspruch 5.

8. Elektrische Maschine (6) umfassend einen Rotor (24) nach Anspruch 6 und/oder Stator (22) nach Anspruch 7.

9. Elektrisches Gerät (2) umfassend eine elektrische Maschine (32) nach Anspruch 8 zu seinem Antrieb.

## Claims

1. Method for winding an excitation coil (32) for an electrical machine (6), comprising:
- applying a thermally conductive medium (30) to a winding support (28), and
- winding a coil (32) on the winding support (28) to which the thermally conductive medium (30) has been applied, the thermally conductive medium (30) being a viscous medium (30), so that the coil wire is immersed into the thermally conductive medium (30) during the winding of the excitation coil onto the winding support, **characterized in that** a surface (38) of the winding support (28) is roughened in regions (40) of rotor legs, and the coil wire is completely enclosed by the viscous medium (30) after the winding of the individual coil wires, so that the interspaces between the individual coil wires are filled.

2. Method according to Claim 1, the viscous medium (30) being a thermally conductive paste (30).

3. Method according to Claim 1, the viscous medium (30) being an adhesive (30).

4. Method according to one of the preceding claims, comprising roughening a surface (38) of the winding support (28) before the application of the thermally conductive medium (30).

5. Excitation coil (32) for an electrical machine (6), which is produced by a method according to Claim 1.

6. Rotor (24) comprising an excitation coil (32) according to Claim 5.

7. Stator (22) comprising an excitation coil (32) according to Claim 5.

8. Electrical machine (6) comprising a rotor (24) according to Claim 6 and/or a stator (22) according to Claim 7.

9. Electrical device (2) comprising an electrical machine (32) according to Claim 8 for driving it.

## Revendications

1. Procédé de bobinage d'une bobine d'excitation (32) d'une machine électrique (6), le procédé comportant les étapes qui consistent à :
appliquer un fluide thermiquement conducteur (30) sur un support de bobinage (28) et
bobiner une bobine (32) sur le support de bobinage (28) sur lequel le fluide thermiquement conducteur (30) a été appliqué, le fluide thermiquement conducteur (30) étant un fluide visqueux (30), de telle sorte que le fil de bobinage s'enfonce dans le fluide thermiquement conducteur (30) lors du bobinage de la bobine d'excitation sur le support de bobinage,
**caractérisé en ce que**
une surface (38) du support de bobinage (28) est rendue rugueuse dans des parties (40) d'aile de rotor et le fil de bobinage est complètement englobé dans le fluide visqueux (30) après le bobinage des différents fils de bobinage, de telle sorte que les espaces intermédiaires situés entre les différents fils de bobinage soient remplis.

2. Procédé selon la revendication 1, dans lequel le fluide visqueux (30) est une pâte thermiquement conductrice (30).

3. Procédé selon la revendication 1, dans lequel le fluide visqueux (30) est un adhésif (30).

4. Procédé selon l'une des revendications précédentes, comprenant l'opération consistant à rendre rugueuse une surface (38) du support de bobinage (28) avant l'application du fluide thermiquement conducteur (30) .

5. Bobine d'excitation (32) pour machine électrique (6) réalisée en recourant à un procédé selon la revendication 1.

6. Rotor (24) comportant une bobine d'excitation (32) selon la revendication 5.

7. Stator (22) comportant une bobine d'excitation (32) selon la revendication 5.

8. Machine électrique (6) comprenant un rotor (24) selon la revendication 6 et/ou un stator (22) selon la revendication 7.

9. Appareil électrique (2) comprenant une machine électrique (32) selon la revendication 8 pour assurer son entraînement.
